(19) Europäisches Patentamt / European Patent Office / Office européen des brevets

(11) **EP 3 567 359 B1**

(12) **EUROPEAN PATENT SPECIFICATION**

(45) Date of publication and mention
of the grant of the patent:
**05.10.2022 Bulletin 2022/40**

(21) Application number: **18171269.6**

(22) Date of filing: **08.05.2018**

(51) International Patent Classification (IPC):
*G01N 1/14* *(2006.01)*    *G01N 35/10* *(2006.01)*
*G01F 23/292* *(2006.01)*

(52) Cooperative Patent Classification (CPC):
**G01N 1/14; G01F 23/292; G01F 23/2921;
G01F 23/2928; G01N 35/1011; G01N 35/1016;**
G01N 2001/1418; G01N 2035/1025;
G01N 2035/1062

(54) **LIQUID HANDLING SYSTEM AND A METHOD FOR ANALYSING A STATE OF A TIP**

FLÜSSIGKEITSHANDHABUNGSSYSTEM UND VERFAHREN ZUR ANALYSE DES ZUSTANDS EINER SPITZE

SYSTÈME DE MANIPULATION DE LIQUIDES ET PROCÉDÉ PERMETTANT D'ANALYSER L'ÉTAT D'UNE POINTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.11.2019 Bulletin 2019/46**

(73) Proprietor: **Sartorius Biohit Liquid Handling Oy
00880 Helsinki (FI)**

(72) Inventors:
• **HÄMÄLÄINEN, Mikko
00510 Helsinki (FI)**
• **VIHINEN, Pasi
00710 Helsinki (FI)**
• **FORSMAN, Staffan
05400 Jokela (FI)**

(74) Representative: **Laine IP Oy
Porkkalankatu 24
00180 Helsinki (FI)**

(56) References cited:
**US-A- 5 844 686      US-A- 5 919 706
US-A1- 2005 124 059   US-A1- 2005 257 612
US-A1- 2007 227 271**

## Description

FIELD

The present invention relates to a liquid handling system, and more particularly to optical and photometric methods for monitoring and analysing the state of tips used in such systems.

BACKGROUND

In hand-held pipettes and in automated liquid handling devices (liquid handling robots), accurate pipetting necessitates reliable methods for detecting and monitoring the state of the tip to which liquid is to be aspirated. First, the tip needs to be immersed to the liquid to be aspirated to a certain depth. Then, a precise volume of liquid is aspirated and simultaneously the tip is lowered to keep the lower end of the tip under the liquid surface. Finally, the tip is transferred above a receiving container and a part or all of the liquid is dispensed to the container.

It is known to use, for example, pressure measurement or capacitive methods for detecting liquid level in a pipette tip. These methods suffer from many drawbacks. For high viscosity fluids, liquid level change is slower than the pressure change, which decreases the accuracy of pressure-based liquid level monitoring. A pressure measurement cannot detect partial clogging of the tip end reliably in cases where air still can flow past the clogs. Further, ambient pressure and altitude affect the measured pressure values.

EP 1756587 B1 discloses an aspirator system including an aspirator body member having a fluid passageway extending therein and a first and second optical conductor configured to receive and/or transmit light therethrough. A controller detects contact of the aspirator tip with a fluid based on a level of light received from the aspirator tip through at least one of the first and second optical conductors and determines a level of the fluid based on a position of the aspirator body member when contact of the aspirator tip with the fluid is detected.

Photometric methods have been used in automatic analysers to some extent:

US 8203721 B2 discloses a photometric method for detecting the liquid-gas interface in a well of a microtiter plate in an automatic liquid handling apparatus. Light is directed simultaneously to plural illumination points which lie in a flat, convex or concave plane in correspondence with the actual shape of the liquid interface to be detected.

EP 1756587 B 1 discloses an optical liquid detection method for an automated aspirator system. In the method, aspirator tips having external diameter change discontinuities are used. Light is passed through the tip material. Contact of the tip and a fluid is detected optically by detecting a change in the light reflected from an outer surface of the tip upon contact of the discontinuities and the fluid.

The following publications disclose the use of special tips for the implementation of a photometric detection of liquid level in a hand-held pipette:

FI 120336 B describes an optical method for analysing the liquid in a pipette tip. The tip comprises optical grating structures, and light is conducted to the liquid via the tip material and the gratings. The light source and the detector are located in the pipette body.

US 5844686 describes incorporation of mirrors and windows to a pipette tip for the purpose of conducting a photometric measurement.

US 2005/124059 A1 discloses an automatic pipette in an analytic device which uses disposable pipette tips, and in which proper coupling of the pipette tip to the pipette, accurate volume of the aspirated fluid, and distance of the pipette tip to a biochip are determined using a plurality of sensors that are coupled to the automatic pipette. A laser/detector element is used to determine a distance between the detector and the surface of a fluid that is aspirated into the pipette tip. The element can be configured to operate using time-of-flight detection, interference and/or phase detection, strength of reflection, and/or triangulation detection.

There exists a need for developing an improved tip monitoring and liquid level detection method that is accurate, independent from the surrounding ambient conditions and from the characteristics of the liquid, and which can be used successfully in both hand-held pipettes and automated pipetting systems across their whole range of dispensing volumes, together with conventional disposable tips.

At least some embodiments of the present invention are intended to overcome at least some of the above discussed disadvantages and restrictions of the known methods for analysing and monitoring a tip and its contents in liquid handling devices.

SUMMARY OF THE INVENTION

The invention is defined by the features of the independent claims. Some specific embodiments are defined in the dependent claims.

According to a first aspect of the present invention, there is provided a liquid handling system for dispensing a liquid sample from a tip, according to claim 1.

Various embodiments of the first aspect may comprise at least one feature from the following bulleted list:

- The first and second detectors and the light source are located inside a cylinder of the liquid handling system, and the liquid handling system is a hand-held pipette.
- The first and second detectors are located inside a cylinder of the liquid handling system, and the light source is located outside the cylinder.
- The first and second detectors and the light source are located outside a cylinder of the liquid handling system.
- The light source is located above an upper edge of the tip and configured to project light into a material of the tip.
- The light source is located on one side of the tip and configured to project light towards the tip, and the liquid handling system is an automated liquid handling station.
- A cylinder of the liquid handling system is configured to conduct light from the light source through a material of the cylinder to an interior of the tip, preferably to a liquid surface.
- The system comprises a time-of-flight component which is located inside a cylinder of the liquid handling system.
- The system comprises a time-of-flight component, and the light source in the time-of-flight component is located outside a cylinder of the liquid handling system, and the first detector in the time-of-flight component is located inside the cylinder of the liquid handling system.
- The system comprises an optical fibre extending from the light source to an interior of the tip, preferably towards a liquid surface inside the tip, and configured to guide the first beam of light from the light source to the liquid surface.
- The system comprises an optical component, such as a lens or a cone, located in front of the first detector and configured to focus the first beam of light from an interior of the tip, preferably from a liquid surface inside the tip, onto the first detector.
- A lower edge of a cylinder of the liquid handling system is lens-shaped, and the cylinder is configured to conduct light from the light source through a material of the cylinder and said lens-shaped lower edge to an interior of the tip, preferably to a liquid surface, and wherein the cylinder is further configured to collect the light that has interacted with the tip or its contents, particularly with the liquid surface, to the first detector.
- The system comprises an optical component, and the optical component is a removable lens system which connects a cylinder of the liquid handling system to a tip, and which is attached to an outer surface of the cylinder and an inner surface of the tip, wherein the lens system is configured to conduct light from the light source to an interior of the tip, particularly to a liquid surface, and wherein the lens system is further configured to collect the light that has interacted with the tip or its contents, particularly with the liquid surface, to the first detector.
- The system comprises a support arm that is movable around and along the tip, and the first detector, preferably also the second detector, is attached to the support arm.
- The first detector, preferably also the second detector, is formed as a line sensor.
- The system comprises a support arm that is movable around and along the tip, and the light source is attached to the support arm.
- The light source is located inside a cylinder of the liquid handling system.
- The system comprises two support arms on opposite sides of the tip, and the light source is attached to one of said support arms and the first detector is attached to the other of said support arms, which support arms are movable around the tip.

According to a second aspect of the present invention, there is provided a method for analysing a state of a disposable tip that is used in a liquid handling system for aspirating and dispensing liquid, according to claim 13.

Various embodiments of the second aspect may comprise at least one feature from the following bulleted list:

- The first beam of light interacts with a material of the tip or a liquid inside the tip or both.
- The analysis comprises one or more of the following: determination of a liquid level in the tip, determination of liquid volume in the tip, determination of contact between the tip and a liquid surface, determination of contact between the tip and an external container, and determination of a movement of the tip.
- The analysis step comprises determination of a liquid level or liquid volume in the tip, and the quantity is reflectance.
- The analysis step comprises determination of a liquid level or liquid volume in the tip, and the quantity is absorbance.
- The liquid handling system is a system according to the first aspect of the present invention.

At least some embodiments of the present invention provide significant advantages over the known methods for liquid level detection and tip monitoring in liquid handling devices. The present method can measure liquid level accurately even for high-viscosity fluids, the method is independent from ambient pressure conditions, and the method can reliably detect any clogging of the tip.

At least some embodiments of the invention provide versatile optical methods that can be easily implemented for tip monitoring both in hand-held and automated liquid handling devices.

BRIEF DESCRIPTION OF THE DRAWINGS

FIGURE 1 illustrates the principle of relative measurement by using two detectors in accordance with at least some embodiments of the present invention;

FIGURE 2 shows an embodiment in which the main interaction between the light and the liquid in the tip is reflectance;

FIGURES 3 and 4 show embodiments in which the main interaction between the light and the liquid in the tip is absorption;

FIGURES 5 and 6 show further embodiments in which the main interaction between the light and the liquid in the tip is absorption;

FIGURES 7 and 8 show further embodiments in which the main interaction between the light and the liquid in the tip is reflectance;

FIGURES 9 and 10 show further embodiments in which the main interaction between the light and the liquid in the tip is reflectance;

FIGURES 11 and 12 show detachable modules for a photometric measurement in accordance with at least some embodiments of the present invention;

FIGURE 13 shows an embodiment in which the light source and the detector are movable around the tip.

FIGURE 14 shows an embodiment in which the detector is movable around the tip.

FIGURE 15 shows an embodiment in which the light source and the detector are movable around the tip.

FIGURE 16 illustrates an embodiment in which a time-of-flight component located inside the cylinder is utilized.

FIGURES 17 and 18 illustrate embodiments in which a time-of-flight component located partly inside the cylinder is utilized.

FIGURE 19 shows the experimental set-up for a photometric measurement in accordance with an embodiment of the present invention.

FIGURE 20 is a graph showing the measured signal as a function of aspirated liquid volume in accordance with an embodiment of the present invention.

EMBODIMENTS

DEFINITIONS

In the present context, the term "liquid handling system" comprises both hand-held pipettes and automated liquid handling stations or robots. These systems can be manual, electronic or electromechanical.

In the present context, the term "tip" comprises both disposable and non-disposable tips that are removable and used in hand-held pipettes or automated liquid handling stations or robots for receiving a liquid sample that is to be dispensed to a container, a microplate or like. Such tips can be tailor-made or mass produced and made of any suitable material, preferably of a plastic material. In a preferred embodiment, the tip is a disposable tip.

In a liquid handling system, such as a pipette, there is a linear actuator for driving a plunger lengthwise in a cylinder to aspirate and dispense fluid into and from a pipette tip.

We have observed that an optical measurement can be applied successfully for the detection and monitoring of different states of a tip in the course of liquid handling or dispensing activities. In the present context, "a state of a tip" refers to, for example, liquid level or liquid volume in a pipette tip, stability of the tip, contact between the tip and an external liquid container, or contact between the tip and a liquid surface in a container. The present method is based on performing a relative measurement with two detectors. The use of this principle enables the design of a surprisingly large set of working measurement geometries.

The optical method can be based on the time-of-flight principle or on photometry. In photometric methods, the intensity of light is the measured quantity.

In some embodiments of the present invention, light is passed via particular optical paths through or inside the tip to make the light interact with the tip and/or its contents in various ways. After the interaction, the light is collected and characterized at a detector to analyse the state of the tip and any changes therein.

The present method makes it possible to detect the liquid level in the tip, the stability of the tip, the liquid volume in the tip, and contact between the tip and a liquid surface in a container by using an optical measurement.

The geometrical arrangement of the measurement determines the type of interaction that takes place between the light and the tip or the liquid in the tip. The interaction can be, for example, reflection, absorption, refraction, scattering or interference. Preferably, the interaction is either reflection or absorption. Factors that affect the measurement dynamics include the direction and angle of incidence of the light, the location of the detector, the geometry of the tip, and the wavelength of the light.

In a preferred embodiment, the light from the light source is split into two beams which pass via two different optical paths. By "a different optical path" it is meant that the paths pass at least partly via different sections or interfaces of materials of the tip, the cylinder of the liquid handling system, or the liquid/airspace inside the tip; and/or the length of the path is different at least partly and/or the angle of incidence is different. One or both of the optical paths may pass inside the tip's airspace. One or both optical paths may pass within the tip material or the cylinder material.

Preferably, the optical measurement is performed by using infrared, ultraviolet or visible light, or a combination thereof.

In a photometric method, the light source is preferably a LED or a laser.

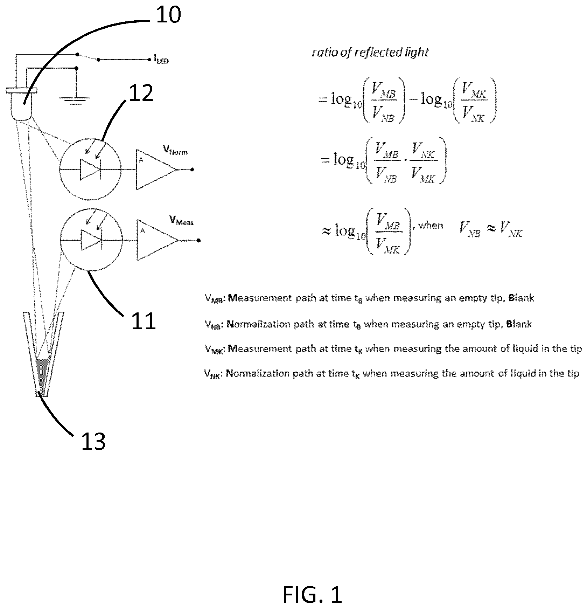

FIGURE 1 illustrates the principle of relative measurement by using two optical detectors 11, 12. In this embodiment light from a LED 10 is split to two optical paths. The first optical path (the measurement path) is configured for an interaction with the tip 13, and the second optical path is configured for a measurement of the intensity of the light source 10 directly. Instability of the light source is compensated by measuring a relative value between the two detectors.

In the first optical path, the interaction between the light and the liquid to be measured is mainly reflection of light from the liquid surface. A relative reflectance measurement is carried out. The following Equation 1 defines relative reflectance R as a function of blank and time-dependent voltage signals of the detectors:

$$R = \log_{10}\left(\frac{V_{MB}}{V_{NB}}\right) - \log_{10}\left(\frac{V_{MK}}{V_{NK}}\right) = \log_{10}\left(\frac{V_{MB}}{V_{NB}} \cdot \frac{V_{NK}}{V_{MK}}\right) \approx \log_{10}\left(\frac{V_{MB}}{V_{MK}}\right), \qquad (\text{Eq. 1})$$

when $V_{NB} \approx V_{NK}$.

In Equation 1, $V_{MB}$ is the voltage of the measurement detector 11 in a blank measurement when the tip is empty, and $V_{NB}$ is the voltage of the normalization detector 12 in a blank measurement when the tip is empty. $V_{MK}$ is the voltage of the measurement detector at the point of time $t_K$ when the tip contains liquid, and $V_{NK}$ is the voltage of the normalization detector at the point of time $t_K$ when the tip contains liquid.

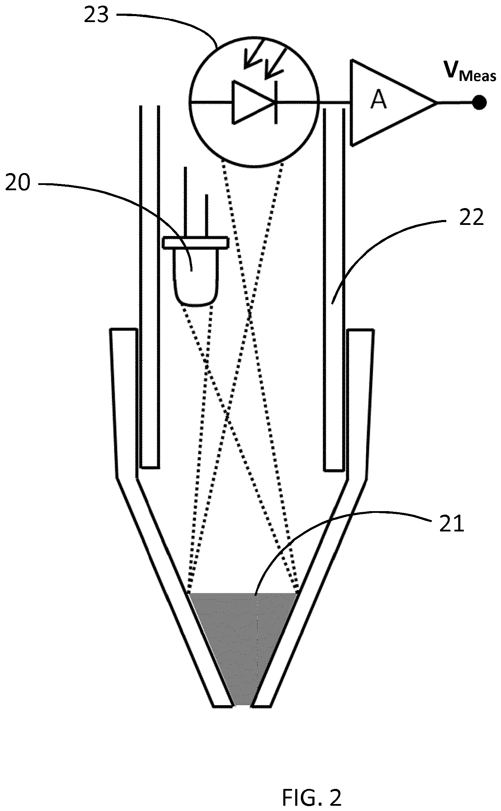

In FIGS. 2 to 18, the second optical path and the normalization detector are not shown for the sake of clarity. Preferably, in the embodiments shown in FIGS. 2 to 18, the second optical path is configured for a measurement of the intensity of the light source directly.

In FIGURE 2, the light source 20 and the measurement detector 23 are both located inside the cylinder 22 of the pipette. The main interaction between the light that passes via the measurement path and the liquid to be measured is reflection from the liquid surface 21. Relative reflectance is measured.

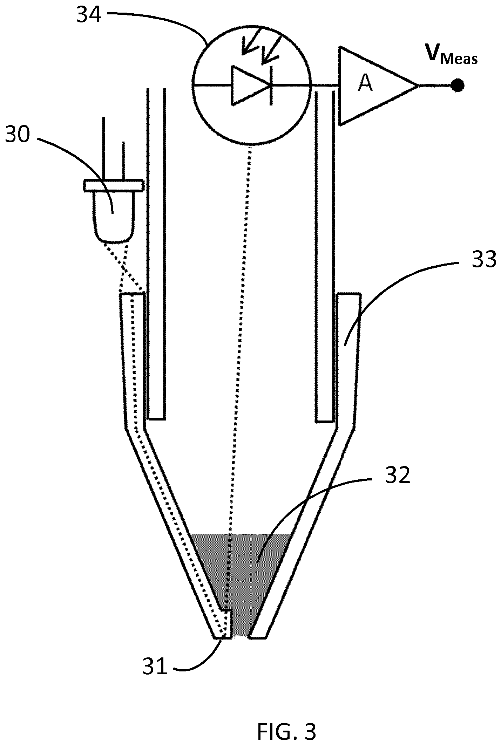

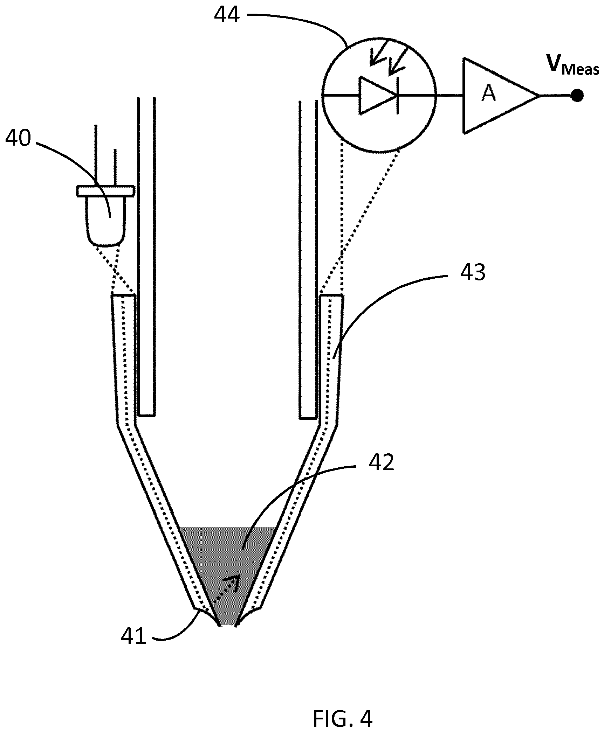

In FIGS. 3 and 4, the light is passed into the tip material, and the light is reflected from the lower edge 31, 41 of the tip 33, 43. The tip has a shape that is adapted for the optical measurement so that the light passes from the tip to the liquid. The main interaction between the light that passes via the measurement path and the liquid 32, 42 to be measured is absorption as the light passes through the liquid in the tip. The light source is depicted by the reference signs 30, 40 and the measurement detector by the reference signs 34, 44.

We have observed that the geometries shown in FIGS. 2 and 4 are particularly reliable and working.

The embodiment of FIG. 3 is particularly suitable for use in automated liquid handling stations, because the illumination and detection geometry is approximately vertical in the sense that the light source 30 and the detector 34 are located above the tip 33.

If the tip contacts a liquid surface in an external container, a decrease in the measured signal can be observed as the proportion of the light reflected from the lower edge of the tip decreases in relation to the amount of light passing through the lower edge. This is based on the fact that the refractive indices of the tip material and the liquid are similar and they differ from the refractive index of air.

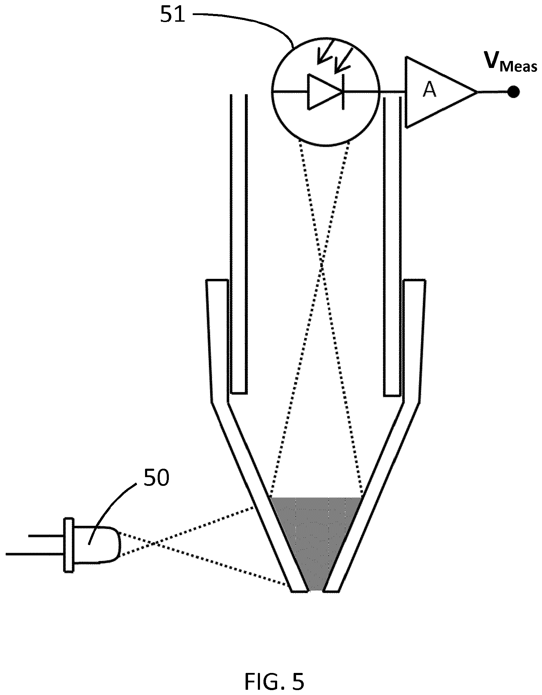

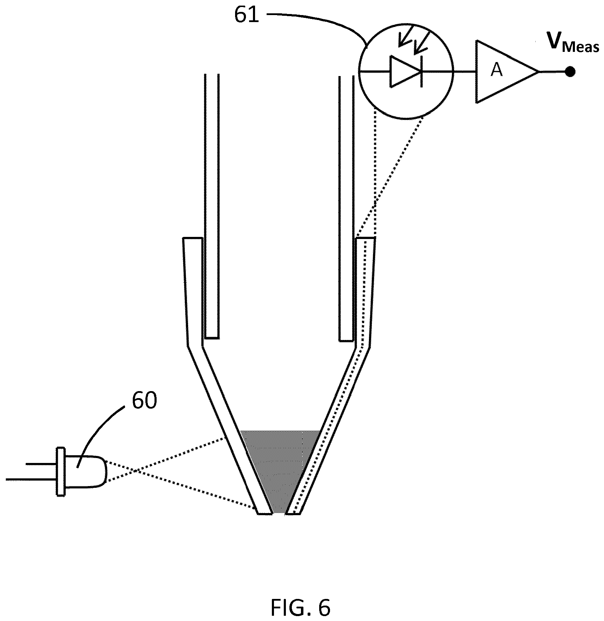

In FIGS. 5 and 6, the tip is illuminated by a light source 50, 60 from outside, and the light is reflected from the tip surfaces to the detector 51, 61. The response of the liquid to be measured is based on absorption as the light passes through the liquid, and on other optical phenomena.

In the embodiments illustrated in FIGS. 3, 4, 5 and 6, it is possible to detect a contact between the tip and an external container.

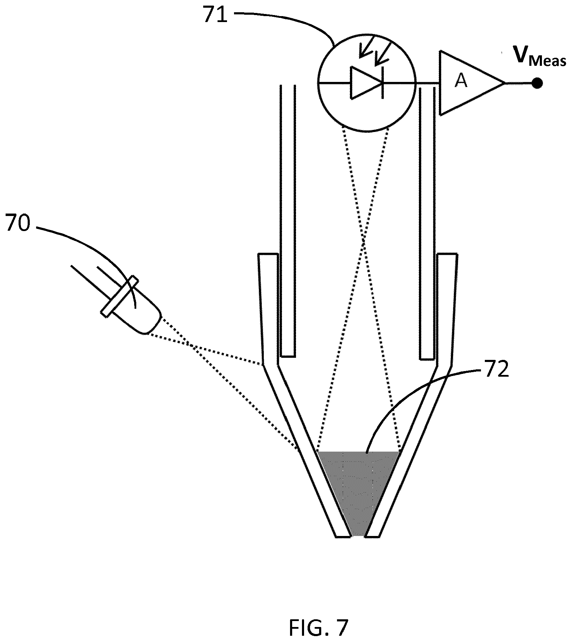

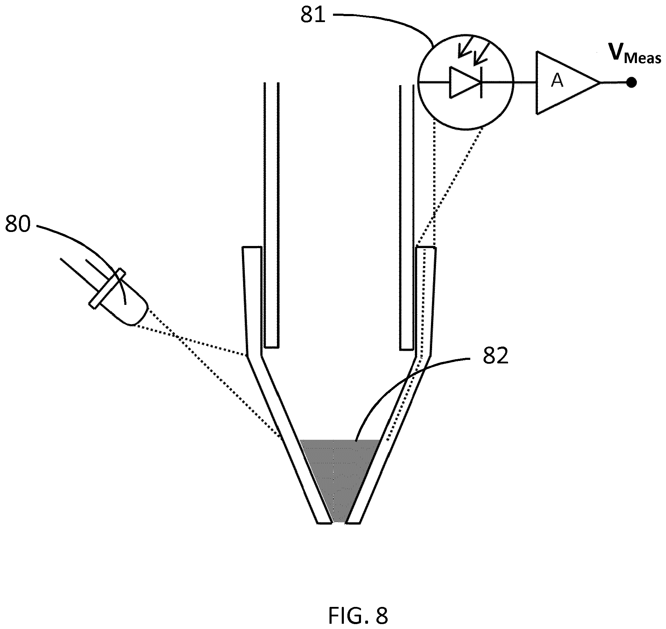

In FIGS. 7 and 8, the tip is illuminated by the light source 70, 80 from outside, and the light is reflected from the tip and liquid surfaces to the detector 71, 81. The response of the liquid to be measured is based on reflection from the liquid surface 72, 82, and on other optical phenomena.

The embodiments shown in FIGS. 5 to 7 provide versatile measurement possibilities. By changing the incident angle, it is possible to measure various reflections of light: reflection directly from the liquid surface; reflection from an optical discontinuity between the liquid and the plastic tip material; or observing the change of light conductivity of the plastic tip material.

The embodiments shown in FIGS. 5 to 8 are particularly suitable for use in automated liquid handling stations. In such stations, it is possible to select the location and orientation of the light source quite freely, and for example illumination of the tip from the side is possible.

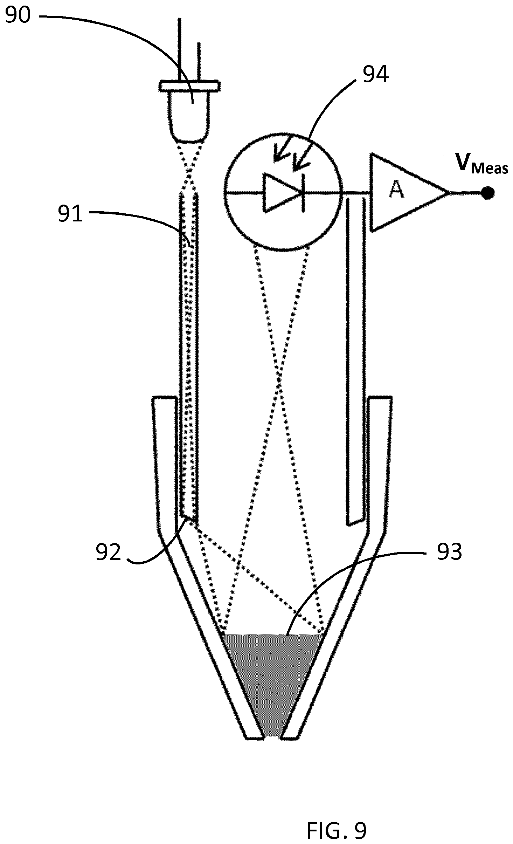

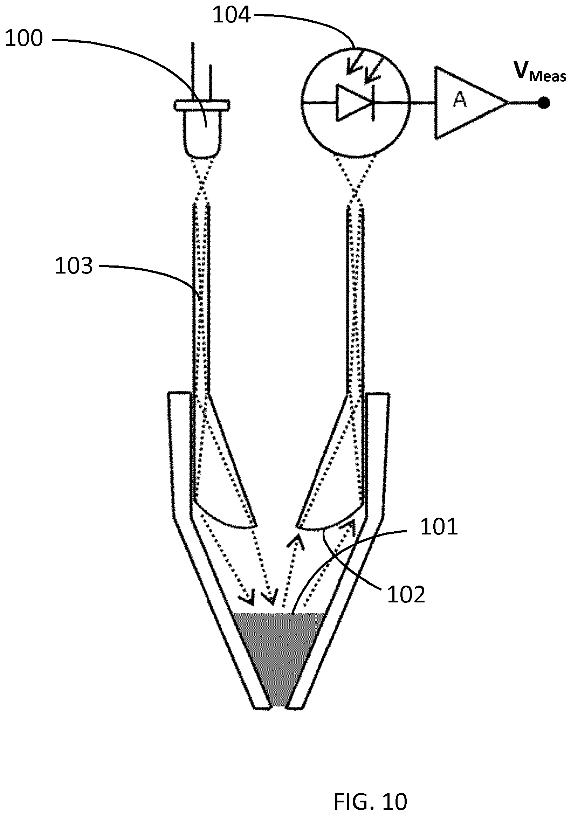

In FIGS. 9 and 10, the light is passed into the material of the cylinder 91, from where it is refracted from a lower edge 92 of the cylinder towards the liquid surface 93. The lower edge 92 has an inclined surface or a lens shape. The response of the liquid to be measured is based on reflection from the liquid surface, and on other optical phenomena. The light source is depicted by the reference sign 90 and the measurement detector by the reference sign 94.

The embodiment of FIG. 9 can be applied both in a hand-held pipette and in an automated liquid handling station. The measurement geometry enables a compact structure.

In FIGURE 10, the light that is reflected from the liquid surface 101 is collected over a maximal area by using the lower edge 102 of the cylinder which has been shaped as a lens with a large diameter. The body 103 of the cylinder functions as a light conductor inside which the light stays due to total internal reflections. Total internal reflection occurs because the material of the cylinder has a much larger refractive index than the air surrounding it. The light source is depicted by the reference sign 100 and the measurement detector by the reference sign 104. The embodiment of FIG. 10 is applicable both in an automated liquid handling station and in a hand-held pipette.

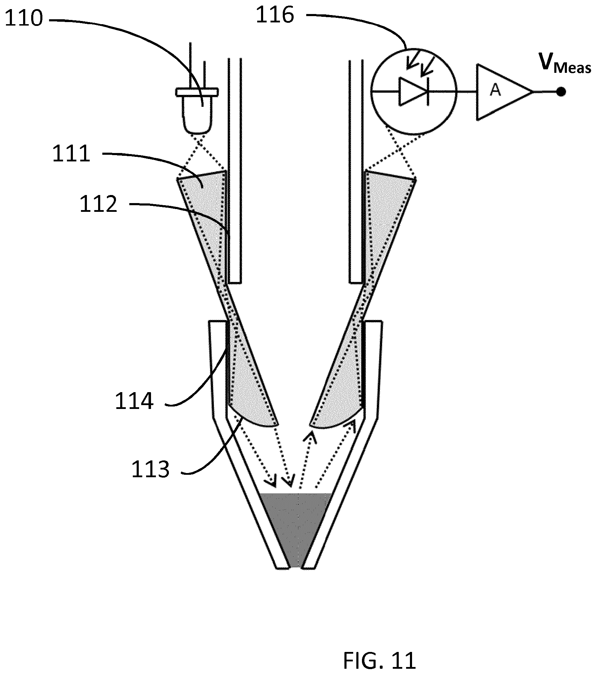

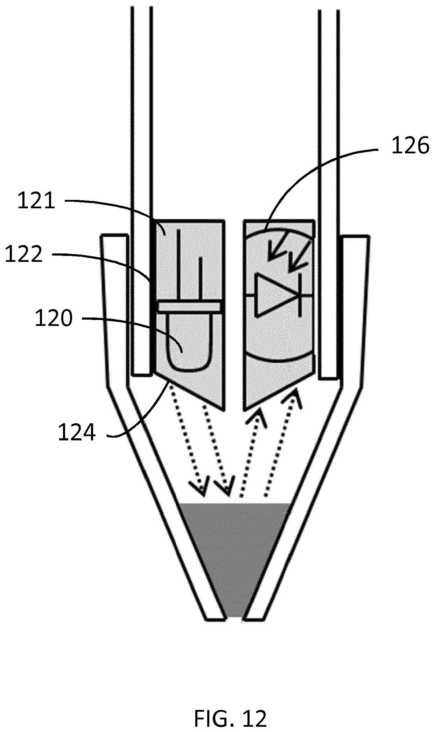

In FIGS. 11 and 12, a detachable measurement module in the form of a lens system that is secured either on an inner surface or an outer surface of the cylinder is used.

In FIGURE 11, the module 111 is sealed against an outer surface 112 of the cylinder. The body of the module functions as a light conductor and a lower surface 113 of the module functions as a lens. The tip is sealed against an outer surface 114 of the body of the module. The light source is depicted by the reference sign 110 and the measurement detector by the reference sign 116.

The embodiment of FIG. 11 is particularly suitable for use in automated liquid handling stations.

In FIGURE 12, the module 121 is sealed against an inner surface 122 of the cylinder. The light source 120 and the detector 126 are located inside the module: In one embodiment they are encased. In another embodiment they have been casted inside a light conductor that forms the module. A lower surface 124 of the module forms a surface that reflects the light so that the light becomes reflected towards the liquid surface. Alternatively, small-sized components can be directed towards the liquid surface inside the module.

By using photoconductors, the geometrical arrangements of FIGS. 1 to 11 can be realized by transferring the light source and the detector to a desired location, for example close to the pipette body.

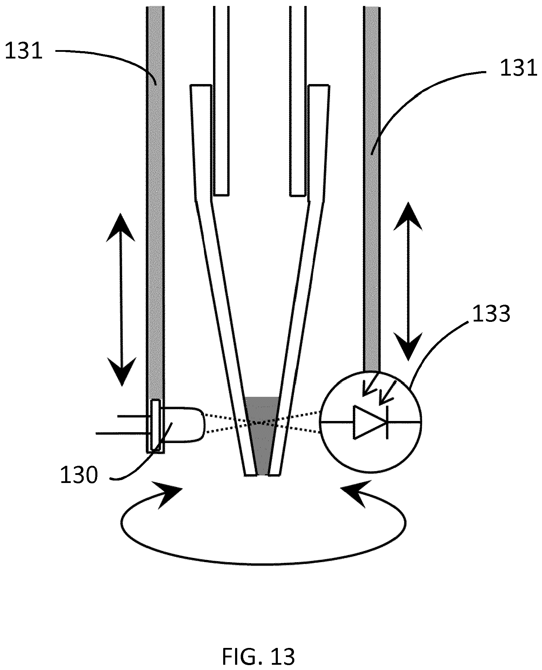

In FIGURE 13, the light source 130 and the detector 133 are located on opposite sides of the tip and secured to a movable support frame 131. The frame can be formed as two support arms. The tip is scanned by rotating the frame and by moving it in the vertical direction. The tip and its contents can be scanned very accurately. On the basis of the measurement data, it is possible to observe the straightness of the tip, the liquid volume, mixing of different liquids, and an air space between two liquids in a dilution mode of the pipette.

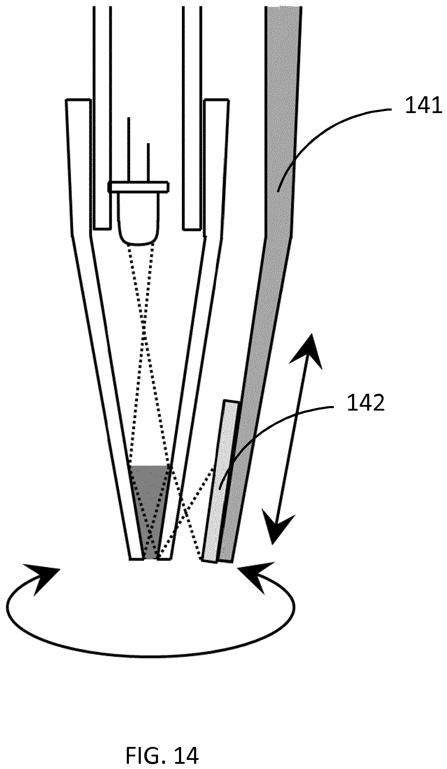

In FIGURE 14, a high-resolution line sensor 142 is used as a detector. The sensor is secured to a movable support arm 141. By moving and rotating the support arm, the sensor rotates around the tip. In this way, the tip and its contents can be scanned quickly and accurately. The uppermost pixels of the sensor can be used as a reference in the measurement so that a separate reference detector is not needed any more for obtaining a relative measurement. Instead of a line sensor, a two-dimensional image sensor can also be used.

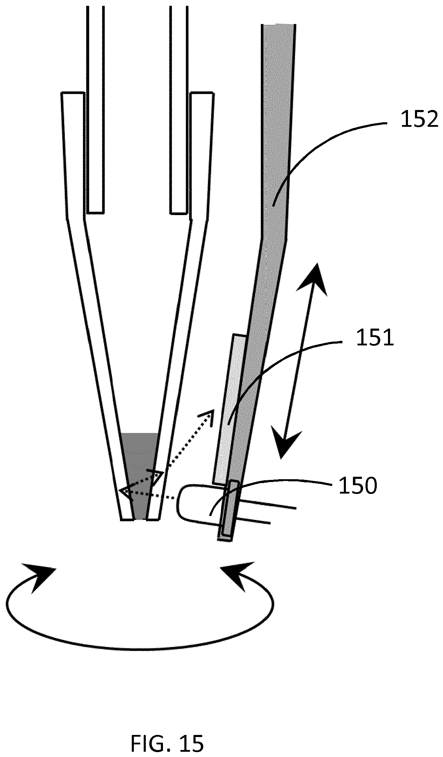

In FIGURE 15, the light source 150 is located in a lower end of the support arm 152, below the line sensor 151. A part of the light that has passed at a right angle through an outer surface of the tip is reflected from an opposite outer surface of the tip upwards, towards the line sensor.

The embodiments shown in FIGS. 13 to 15 are particularly suitable for use in automated liquid handling stations for liquid level detection.

In a photometric measurement, the light source may produce different wavelengths which are frequently alternated according to a time division principle. Parallel measurement data obtained in this way can be utilized to improve precision of the measurement for liquids with different colours. It becomes possible to analyse the mixing of different liquids inside a tip. By using the same light source component, it is easy to produce different wavelengths, for example by using an RGB LED.

In a photometric measurement, signal processing can be carried out by utilizing the principle of phase-sensitive detection, or a lock-in amplifier. The input signal to be measured modulates a carrier signal which has been formed by chopping the light source. In this way the input signal is shifted to a suitable higher frequency where it cannot be affected by low-frequency noise. The signal is filtered by an analogue anti-aliasing low-pass filter before sampling that is carried out by an AD converter. After demodulation, the signal is filtered with a steep and narrow-band digital low-pass filter, whereby the input signal can be separated from noise.

In addition to a traditional photometric measurement, it is possible to use a modern and integrated time-of-flight component for monitoring movements of a pipette tip and to determine the liquid volume contained in the tip.

A time-of-flight component measures the time-of-flight of a light signal. The light transmitted by the component is reflected from a liquid surface to a detector located at an opposite edge of the component, whereby the component calculates the distance to the liquid surface on the basis of the time-of-flight of the light. An advantage of the time-of-flight measurement is that it is independent of the reflected light intensity on the condition that the intensity exceeds a certain minimum level.

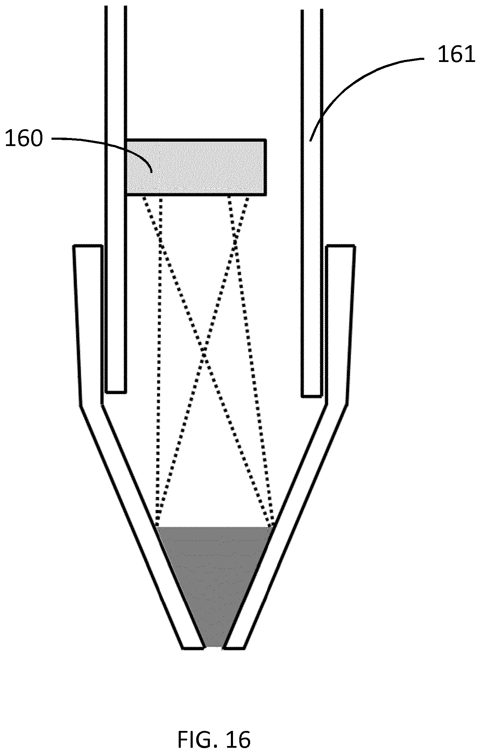

In FIGURE 16, a time-of-flight component 160 is located entirely inside the pipette cylinder 161.

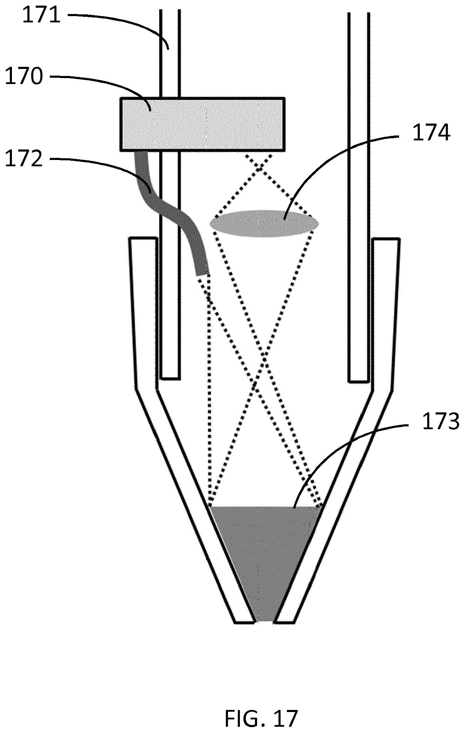

In FIGURE 17, a time-of-flight component 170 is located only partly inside the pipette cylinder 171. The transmitter side of the component is located outside the cylinder. The light produced by the transmitter is guided to the inside of the cylinder via a multi-mode optical fibre 172. One end of the fibre is formed as a lens that guides the light towards the liquid surface 173. The light reflected from the liquid surface is collected over a maximal area by using a lens 174 that focuses the collected light onto the detector of the measuring component. By using the optical fibre, the incident light is guided either past or through the lens that collects reflected light in order to avoid a direct reflection of the incident light from the lens onto the detector. In this way the measurement result is as accurate as possible. The lens can be a Fresnel lens, which enables it to be light and thin.

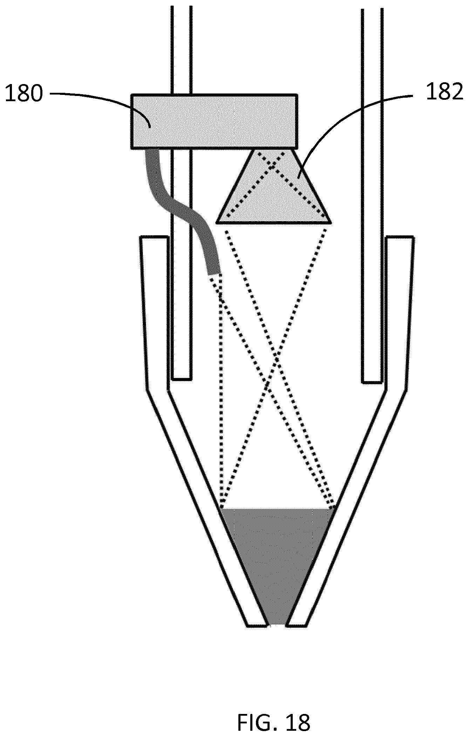

In FIGURE 18, a similar time-of-flight component 180 as in FIGURE 17 is used. The lens that collects reflected light has been replaced with a cone 182 that collects light reflected from the liquid surface. The inner surface of the cone is reflective, whereby the cone efficiently focuses the collected light onto the detector of the measuring time-of-flight component. Instead of a cone, the collector may be shaped as a paraboloid.

The embodiments shown in FIGS. 16 to 18 can be applied both in a hand-held pipette and in an automated liquid handling station.

In some embodiments of the invention, light is conducted and directed towards the liquid surface or towards the tip by using an optical fibre or a photoconductor.

In some embodiments of the invention, light is conducted and directed towards the detector by using an optical fibre or a photoconductor.

The use of an optical fibre brings flexibility in positioning the light source and/or the detector in the liquid handling system, particularly in a hand-held pipette. In hand-held pipettes the space available for adding extra components is limited.

When the tip is illuminated from outside, it is possible to detect contact of the tip with a liquid surface in a container that is separate from the pipette and used for example as the source of liquid or as a receiving container for dispensed liquid.

In some embodiments, the light source and the detectors can be positioned close to the body of the pipette by utilizing photoconductors.

In one embodiment, infrared light is used in the measurement. An IR light source and/or an IR detector may be integrated for example to a lower part of a tip ejection sleeve of a liquid handling system.

In some embodiments, the light is projected (reflected) to the measurement detector via two alternative paths: 1) through the tip material, or 2) through the airspace inside the tip. The present invention enables optimization of signal strength and accuracy with regard to the liquid volume to be analysed: For large liquid volumes (e.g. greater than 0.5 ml, preferably greater than 1 ml), the path 2) is used. For small volumes (e.g. less than 1 ml, preferably less than 0.5 ml), the path 1) is used. It is also possible to use both paths with different weighting.

Preferably, the present method is applicable for analysing liquid volumes from 1 $\mu$l to about 10 ml, more preferably from 10 $\mu$l to 5 ml, for example from 10 $\mu$l to 200 $\mu$l.

Hysteresis phenomena can be applied for analysing whether the conical lower end of the tip contains liquid.

One of the advantages is that conventional disposable tips can be used. The tip need not contain any special means for conducting or directing the light, such as gratings, lenses or custom shapes.

In some embodiments, the tip comprises vertical protruding channels on its opposite sides. The channels are preferably made of the same material as the rest of the tip and they are configured for conducting light from the light source to the detector. The light is conducted from the light source downwards via one channel and upwards to the measurement detector via the other channel.

The present method can be applied to a hand-held pipette or to an automated liquid handling station. In a liquid handling station, two independent methods for analysing the liquid level in a tip can be used, for example the present optical method and a method based on a pressure measurement.

The present method can measure liquid volumes in the μl range accurately.

The present invention overcomes several disadvantages of pressure-based liquid level detection methods: The present invention is not affected by ambient pressure or the height above the sea level. The present invention is capable of detecting clogging of the tip. Additionally, the present method is suitable for detecting liquids with a high viscosity. Movement of such liquids is delayed with regard to a pressure change inside the tip. An optical measurement according to the present invention is capable of detecting the liquid volume contained in the tip immediately, in real time.

In the following, we describe the electronics and signal processing according to some embodiments in more detail.

Relative measurement

Instability of the light source, for example of a LED or a laser, and its power source is compensated by carrying out a relative measurement between two detectors. The light that emanates from the light source is split to two optical paths. One optical path interacts with the pipette tip while the other optical path is configured for measuring the intensity of the light source directly or with a constant attenuation without any interaction with the pipette tip. The two detectors need not be identical as long as they are being used within their linear range. Accuracy of the measurement is based on the linear response of the detectors.

Sources of noise

By the term "noise" we mean everything that affects the result of the measurement but is not a function of the parameter to be measured. In an optical measurement of the pipette tip and the liquid volume inside it, the most significant noise is the noise in the optical signal. The scattered light from the environment and the dark current of the detector are observed in the measured signal as a DC component, and the room lighting may cause a 100-Hz component. The optical and electronic measurement set-up also includes 1/f noise, white noise, and the 50 Hz and 150 Hz components of the mains frequency. With the exception of white noise, the most significant sources of noise mostly have a frequency that is smaller than 175 Hz.

Modulation and sampling

In modulation, an input signal is shifted to a suitable higher frequency where it is no longer affected by low-frequency noise. The signal produced by a detector is modulated to a frequency that corresponds to the chopping of the LED. In a sampling carried out by an AD converter, one digital value is formed per each ON/OFF state of the LED. Therefore, the sampling frequency (FS) is doubled with regard to the modulation frequency. The input signal is transmitted as an amplitude modulated signal with regard to the sampling frequency at the so-called Nyquist frequency (FS/2).

Analogue anti-aliasing filtering

Before the sampling carried out by the AD converter, the signal is filtered by an analogue low-pass filter. The so-called anti-aliasing low-pass filter limits the folding of frequencies that exceed the half of the sampling frequency (FS/2) into the sampled signal during sampling. The sampling of the AD converter is performed synchronously with the modulation, which means that a signal with the frequency FS/2 must pass the analogue low-pass filter, the cut-off frequency of which (-3 dB) is set to FS/2 plus a reasonable marginal.

Demodulation and filtering

The amplitude-modulated input signal at the Nyquist frequency is demodulated, i.e. shifted to a zero frequency, when it is multiplied by a cosine signal at the Nyquist frequency which has the form [1, -1, 1, -1, ...]. Upon amplitude modulation, the spectrum of the modulating signal is shifted around the carrier signal. For the detection of a pipette tip and the volume of liquid inside the tip, the intensity of the signal at the zero frequency is of interest. After demodulation, the input signal is contained in the DC component, and the remaining AC content is considered noise with regard to the measurement. As a result of the demodulation, the largest noise power that is located around the zero frequency is shifted around the Nyquist frequency. After the demodulation, the signal is filtered by a maximally steep and narrow-band low-pass filter to prevent the input signal from being corrupted by noise or interference. In this way the principle of phase-sensitive detection or a lock-in amplifier is realized.

Example

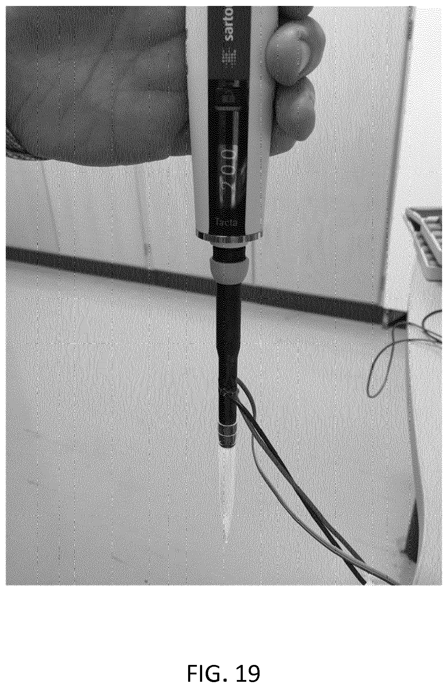

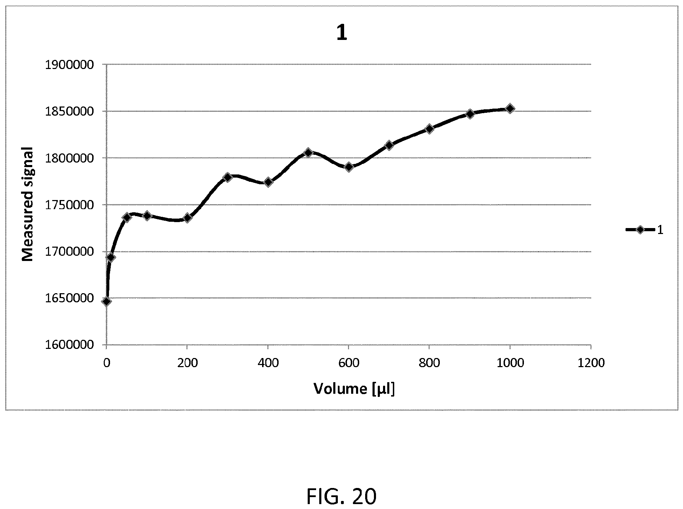

FIGURE 19 shows the measurement system built into a hand-held mechanical pipette (Tacta model of Sartorius). The system is based on a photometric measurement. In this test system, a normalization detector was not used. In all other respects the system employs the measurement geometry illustrated in FIGURE 2. During the measurement, a 1000-μl tip was used, and the dispensing volume was set to 1000 μl. The detector signal was recorded during liquid aspiration. Digital low-pass filtering was carried out by averaging instantaneous AD converter results that were obtained by polling from the measurement system. The results are shown in FIGURE 20 as a graph of measured signal intensity versus liquid volume in the tip. The results show that the system is capable of reliably detecting presence of liquid in a tip and successful picking up of a tip.

It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the scope of the invention. Accordingly, it is not intended that the invention be limited, except as defined by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

INDUSTRIAL APPLICABILITY

At least some embodiments of the present invention find industrial application in hand-held pipettes and automated liquid handling stations.

CITATION LIST

Patent Literature

EP 1756587 B1
US 8203721 B2
EP 1756587 B1
FI 120336 B

US 5844686
US 2005/124059 A1

**Claims**

1. A liquid handling system for dispensing a liquid sample from a tip, said system comprising:

    - a light source configured to project a first beam of light via a first optical path that interacts with the tip or its contents, and further configured to direct a second beam of light via a second optical path that does not interact with the tip and its contents;
    - a first detector configured to detect the first beam of light;
    - a second detector configured to detect the second beam of light;
    - an analysis unit configured to analyse a state of the tip on the basis of signals obtained from the first and second detectors;

    wherein the second detector is a normalization detector configured to measure intensity of the light source;
    the liquid handling system comprising a time-of-flight component which contains the light source and the first detector and which is configured for calculating the distance to the liquid surface in the tip.

2. The system according to claim 1, wherein the first and second detectors and the light source are located inside a cylinder of the liquid handling system, and wherein the liquid handling system is a hand-held pipette.

3. The system according to claim 1, wherein the first and second detectors are located inside a cylinder of the liquid handling system, and the light source is located outside the cylinder.

4. The system according to claim 1, wherein the first and second detectors and the light source are located outside a cylinder of the liquid handling system.

5. The system according to claim 1, wherein the light source is located above an upper edge of the tip and configured to project light into a material of the tip.

6. The system according to claim 1, wherein the light source is located on one side of the tip and configured to project light towards the tip, and wherein the liquid handling system is an automated liquid handling station.

7. The system according to claim 1, wherein a cylinder of the liquid handling system is configured to conduct light from the light source through a material of the cylinder to an interior of the tip, preferably to a liquid surface.

8. The system according to claim 1, wherein:

    the time-of-flight component is located inside a cylinder of the liquid handling system; and
    the liquid handling system is a hand-held pipette.

9. The system according to claim 1, wherein the light source in the time-of-flight component is located outside a cylinder of the liquid handling system, and the first detector in the time-of-flight component is located inside the cylinder of the liquid handling system.

10. The system according to any of the preceding claims, further comprising an optical fibre extending from the light source to an interior of the tip, preferably towards a liquid surface inside the tip, and configured to guide the first beam of light from the light source to the liquid surface.

11. The system according to any of the preceding claims, further comprising an optical component, such as a lens or a cone, located in front of the first detector and configured to focus the first beam of light from an interior of the tip, preferably from a liquid surface inside the tip, onto the first detector.

12. The system according to claim 7, wherein a lower edge of a cylinder of the liquid handling system is lens-shaped, and

    wherein the cylinder is configured to conduct light from the light source through a material of the cylinder and said lens-shaped lower edge to an interior of the tip, preferably to a liquid surface, and
wherein the cylinder is further configured to collect the light that has interacted with the tip or its contents, particularly with the liquid surface, to the first detector.

13. A method for analysing a state of a tip that is used in a liquid handling system for aspirating and dispensing liquid, the method comprising the following steps:

- directing a first beam of light from a light source to a first detector via a first optical path that interacts with the tip or its contents; and measuring a quantity;
- directing a second beam of light from a light source to a second detector via a second optical path that does not interact with the tip and its contents; and measuring intensity of the light source, and
- analysing the state of the disposable tip on the basis of the measured quantity and the measured intensity of the light source;

wherein the second detector is a normalization detector;
the liquid handling system comprising a time-of-flight component which contains the light source and the first detector and which is configured for calculating the distance to the liquid surface in the tip.

14. The method according to claim 13, wherein the first beam of light interacts with a material of the tip or a liquid inside the tip or both.

15. The method according to any of claims 13 to 14, wherein the analysis comprises one or more of the following: determination of a liquid level in the tip, determination of liquid volume in the tip, determination of contact between the tip and a liquid surface, determination of contact between the tip and an external container, and determination of a movement of the tip.

16. The method according to any of claims 13 to 15, wherein the analysis step comprises determination of a liquid level or liquid volume in the tip, and wherein the quantity is reflectance or absorbance.

17. The method according to any of claims 13 to 16, wherein:
the time-of-flight component is located inside a cylinder of the liquid handling system.


**Patentansprüche**

1. Flüssigkeitshandhabungssystem zum Abgeben einer Flüssigkeitsprobe von einer Spitze, das System umfassend:

- eine Lichtquelle, die zum Projizieren eines ersten Lichtstrahls über einen ersten optischen Pfad, der mit der Spitze oder ihrem Inhalt interagiert, ausgelegt ist und weiter zum Richten eines zweiten Lichtstrahls über einen zweiten optischen Pfad, der nicht mit der Spitze und ihrem Inhalt interagiert, ausgelegt ist;
- einen ersten Detektor, der zum Detektieren des ersten Lichtstrahls ausgelegt ist;
- einen zweiten Detektor, der zum Detektieren des zweiten Lichtstrahls ausgelegt ist;
- eine Analyseeinheit, die zum Analysieren eines Zustands der Spitze basierend auf Signalen, die vom ersten und vom zweiten Detektor erhalten werden, ausgelegt ist;

wobei der zweite Detektor ein Normalisierungsdetektor ist, der zum Messen der Intensität der Lichtquelle ausgelegt ist;
das Flüssigkeitshandhabungssystem umfassend eine Laufzeitkomponente, die die Lichtquelle und den ersten Detektor enthält und die zum Berechnen des Abstands zur Flüssigkeitsoberfläche in der Spitze ausgelegt ist.

2. System nach Anspruch 1, wobei sich der erste und der zweite Detektor und die Lichtquelle innerhalb eines Zylinders des Flüssigkeitshandhabungssystems befinden und wobei das Flüssigkeitshandhabungssystem eine handgehaltene Pipette ist.

3. System nach Anspruch 1, wobei sich der erste und der zweite Detektor innerhalb eines Zylinders des Flüssigkeitshandhabungssystems befinden und sich die Lichtquelle außerhalb des Zylinders befindet.

4. System nach Anspruch 1, wobei sich der erste und der zweite Detektor und die Lichtquelle außerhalb eines Zylinders des Flüssigkeitshandhabungssystems befinden.

5. System nach Anspruch 1, wobei sich die Lichtquelle oberhalb eines oberen Rands der Spitze befindet und zum Projizieren von Licht in ein Material der Spitze ausgelegt ist.

6. System nach Anspruch 1, wobei sich die Lichtquelle an einer Seite der Spitze befindet und zum Projizieren von Licht in Richtung der Spitze ausgelegt ist und wobei das Flüssigkeitshandhabungssystem eine automatisierte Flüssigkeitshandhabungsstation ist.

7. System nach Anspruch 1, wobei ein Zylinder des Flüssigkeitshandhabungssystems zum Leiten von Licht von der Lichtquelle durch ein Material des Zylinders zu einem Innenraum der Spitze, vorzugsweise zu einer Flüssigkeitsoberfläche, ausgelegt ist.

8. System nach Anspruch 1, wobei:

   sich die Laufzeitkomponente innerhalb eines Zylinders des Flüssigkeitshandhabungssystems befindet und das Flüssigkeitshandhabungssystem eine handgehaltene Pipette ist.

9. System nach Anspruch 1, wobei sich die Lichtquelle in der Laufzeitkomponente außerhalb eines Zylinders des Flüssigkeitshandhabungssystems befindet und sich der erste Detektor in der Laufzeitkomponente innerhalb des Zylinders des Flüssigkeitshandhabungssystems befindet.

10. System nach einem der vorstehenden Ansprüche, weiter umfassend eine optische Faser, die sich von der Lichtquelle zu einem Innenraum der Spitze, vorzugsweise in Richtung einer Flüssigkeitsoberfläche innerhalb der Spitze, erstreckt und zum Führen des ersten Lichtstrahls von der Lichtquelle zu der Flüssigkeitsoberfläche ausgelegt ist.

11. System nach einem der vorstehenden Ansprüche, weiter umfassend eine optische Komponente, wie eine Linse oder einen Kegel, die sich vor dem ersten Detektor befindet und zum Fokussieren des ersten Lichtstrahls von einem Innenraum der Spitze, vorzugsweise von einer Flüssigkeitsoberfläche innerhalb der Spitze, auf den ersten Detektor ausgelegt ist.

12. System nach Anspruch 7, wobei ein unterer Rand eines Zylinders des Flüssigkeitshandhabungssystems linsenförmig ist, und

   wobei der Zylinder zum Leiten von Licht von der Lichtquelle durch ein Material des Zylinders und den linsenförmigen unteren Rand zu einem Innenraum der Spitze, vorzugsweise zu einer Flüssigkeitsoberfläche, ausgelegt ist, und
   wobei der Zylinder weiter zum Sammeln des Lichts, das mit der Spitze oder ihrem Inhalt, insbesondere mit der Flüssigkeitsoberfläche, interagiert hat, auf den ersten Detektor ausgelegt ist.

13. Verfahren zum Analysieren eines Zustands einer Spitze, die in einem Flüssigkeitshandhabungssystem zum Ansaugen und Abgeben von Flüssigkeit verwendet wird, das Verfahren umfassend die folgenden Schritte:

   - Lenken eines ersten Lichtstrahls von einer Lichtquelle zu einem ersten Detektor über einen ersten optischen Pfad, der mit der Spitze oder ihrem Inhalt interagiert; und Messen einer Menge;
   - Lenken eines zweiten Lichtstrahls von einer Lichtquelle zu einem zweiten Detektor über einen zweiten optischen Pfad, der nicht mit der Spitze und ihrem Inhalt interagiert; und Messen einer Intensität der Lichtquelle und
   - Analysieren des Zustands der Einwegspitze basierend auf der gemessenen Menge und der gemessenen Intensität der Lichtquelle;

   wobei der zweite Detektor ein Normalisierungsdetektor ist;
   das Flüssigkeitshandhabungssystem umfassend eine Laufzeitkomponente, die die Lichtquelle und den ersten Detektor enthält und die zum Berechnen des Abstands zur Flüssigkeitsoberfläche in der Spitze ausgelegt ist.

14. Verfahren nach Anspruch 13, wobei der erste Lichtstrahl mit einem Material der Spitze oder einer Flüssigkeit innerhalb der Spitze oder beidem interagiert.

15. Verfahren nach einem der Ansprüche 13 bis 14, wobei die Analyse eines oder mehrere von Folgendem umfasst:

Bestimmung eines Flüssigkeitspegels in der Spitze, Bestimmung eines Flüssigkeitsvolumens in der Spitze, Bestimmung eines Kontakts zwischen der Spitze und einer Flüssigkeitsoberfläche, Bestimmung eines Kontakts zwischen der Spitze und einem externen Behälter und Bestimmung einer Bewegung der Spitze.

**16.** Verfahren nach einem der Ansprüche 13 bis 15, wobei der Analyseschritt eine Bestimmung eines Flüssigkeitspegels oder eines Flüssigkeitsvolumens in der Spitze umfasst und wobei die Menge ein Reflexionsgrad oder eine Absorbanz ist.

**17.** Verfahren nach einem der Ansprüche 13 bis 16, wobei:
sich die Laufzeitkomponente innerhalb eines Zylinders des Flüssigkeitshandhabungssystems befindet.

**Revendications**

**1.** Système de manipulation de liquides pour la distribution d'un échantillon liquide hors d'un embout, ledit système comprenant :

- une source de lumière conçue pour projeter un premier faisceau de lumière le long d'un premier trajet optique qui interagit avec l'embout ou son contenu, et conçue en outre pour diriger un second faisceau de lumière le long d'un second trajet optique qui n'interagit pas avec l'embout et son contenu ;
- un premier détecteur conçu pour détecter le premier faisceau de lumière ;
- un second détecteur conçu pour détecter le second faisceau de lumière ;
- une unité d'analyse conçue pour analyser un état de l'embout sur la base de signaux obtenus en provenance des premier et second détecteurs ;

dans lequel le second détecteur est un détecteur de normalisation conçu pour mesurer l'intensité de la source de lumière ;
le système de manipulation de liquides comprenant un composant à temps de vol qui renferme la source de lumière et le premier détecteur et qui est conçu pour calculer la distance jusqu'à la surface du liquide dans l'embout.

**2.** Système selon la revendication 1, dans lequel les premier et second détecteurs et la source de lumière sont situés à l'intérieur d'un cylindre du système de manipulation de liquide, et dans lequel le système de manipulation de liquide est une pipette manuelle.

**3.** Système selon la revendication 1, dans lequel les premier et second détecteurs sont situés à l'intérieur d'un cylindre du système de manipulation de liquide, et la source de lumière est située à l'extérieur du cylindre.

**4.** Système selon la revendication 1, dans lequel les premier et second détecteurs et la source de lumière sont situés à l'extérieur d'un cylindre du système de manipulation de liquide.

**5.** Système selon la revendication 1, dans lequel la source de lumière est située au-dessus d'un bord supérieur de l'embout et est conçue pour projeter de la lumière dans un matériau de l'embout.

**6.** Système selon la revendication 1, dans lequel la source de lumière est située d'un côté de l'embout et est conçue pour projeter de la lumière en direction de l'embout, et dans lequel le système de manipulation de liquide est une station automatisée de manipulation de liquide.

**7.** Système selon la revendication 1, dans lequel un cylindre du système de manipulation de liquide est conçu pour conduire la lumière en provenance de la source de lumière à travers un matériau du cylindre et jusqu'à l'intérieur de l'embout, de préférence jusqu'à la surface d'un liquide.

**8.** Système selon la revendication 1, dans lequel :
le composant à temps de vol est situé à l'intérieur d'un cylindre du système de manipulation de liquide ; et le système de manipulation de liquide est une pipette manuelle.

**9.** Système selon la revendication 1, dans lequel la source de lumière dans le composant à temps de vol est située à l'extérieur d'un cylindre du système de manipulation de liquide, et le premier détecteur dans le composant à temps de vol est situé à l'intérieur du cylindre du système de manipulation de liquide.

**10.** Système selon l'une quelconque des revendications précédentes, comprenant, en outre, une fibre optique s'étendant de la source de lumière jusqu'à l'intérieur de l'embout, de préférence en direction de la surface d'un liquide à l'intérieur de l'embout, et conçue pour guider le premier faisceau de lumière en provenance de la source de lumière jusqu'à la surface du liquide.

**11.** Système selon l'une quelconque des revendications précédentes, comprenant en outre un composant optique, tel qu'une lentille ou un cône, situé devant le premier détecteur et conçu pour focaliser le premier faisceau de lumière en provenance de l'intérieur de l'embout, de préférence en provenance de la surface d'un liquide se trouvant à l'intérieur de l'embout, sur le premier détecteur.

**12.** Système selon la revendication 7, dans lequel un bord inférieur d'un cylindre du système de manipulation de liquide est en forme de lentille, et

dans lequel le cylindre est conçu pour conduire la lumière en provenance de la source de lumière à travers un matériau du cylindre et ledit bord inférieur en forme de lentille jusqu'à l'intérieur de l'embout, de préférence jusqu'à la surface d'un liquide, et
dans lequel le cylindre est en outre conçu pour recueillir la lumière qui a interagi avec l'embout ou son contenu, en particulier avec la surface du liquide, pour l'amener jusqu'au premier détecteur.

**13.** Procédé d'analyse d'un état d'un embout utilisé dans un système de manipulation de liquide pour aspirer et distribuer un liquide, le procédé comprenant les étapes suivantes :

- diriger un premier faisceau de lumière en provenance d'une source de lumière jusqu'à un premier détecteur le long d'un premier trajet optique qui interagit avec l'embout ou son contenu ; et mesurer une grandeur ;
- diriger un second faisceau de lumière en provenance d'une source de lumière jusqu'à un second détecteur le long d'un second trajet optique qui n'interagit pas avec l'embout et son contenu ; et mesurer l'intensité de la source de lumière, et
- analyser l'état de l'embout jetable sur la base de la grandeur mesurée et de l'intensité mesurée de la source de lumière ;

dans lequel le second détecteur est un détecteur de normalisation ;
le système de manipulation de liquides comprenant un composant à temps de vol qui renferme la source de lumière et le premier détecteur et qui est conçu pour calculer la distance jusqu'à la surface du liquide dans l'embout.

**14.** Procédé selon la revendication 13, dans lequel le premier faisceau de lumière interagit avec un matériau de l'embout ou avec un liquide se trouvant à l'intérieur de l'embout ou avec les deux.

**15.** Procédé selon l'une quelconque des revendications 13 à 14, dans lequel l'analyse comprend une ou plusieurs des actions suivantes : détermination d'un niveau de liquide dans l'embout, détermination d'un volume de liquide dans l'embout, détermination d'un contact entre l'embout et la surface d'un liquide, détermination d'un contact entre l'embout et un récipient extérieur et détermination d'un mouvement de l'embout.

**16.** Procédé selon l'une quelconque des revendications 13 à 15, dans lequel l'étape d'analyse comprend la détermination d'un niveau de liquide ou d'un volume de liquide dans l'embout, et dans lequel la grandeur est la réflectance ou l'absorbance.

**17.** Procédé selon l'une quelconque des revendications 13 à 16, dans lequel :
le composant à temps de vol est situé à l'intérieur d'un cylindre du système de manipulation de liquide.

*ratio of reflected light*

$$= \log_{10}\left(\frac{V_{MB}}{V_{NB}}\right) - \log_{10}\left(\frac{V_{MK}}{V_{NK}}\right)$$

$$= \log_{10}\left(\frac{V_{MB}}{V_{NB}} \cdot \frac{V_{NK}}{V_{MK}}\right)$$

$$\approx \log_{10}\left(\frac{V_{MB}}{V_{MK}}\right), \text{ when } \quad V_{NB} \approx V_{NK}$$

$V_{MB}$: **M**easurement path at time $t_B$ when measuring an empty tip, **B**lank

$V_{NB}$: **N**ormalization path at time $t_B$ when measuring an empty tip, **B**lank

$V_{MK}$: **M**easurement path at time $t_K$ when measuring the amount of liquid in the tip

$V_{NK}$: **N**ormalization path at time $t_K$ when measuring the amount of liquid in the tip

# FIG. 1

23

20

22

21

$V_{Meas}$

A

FIG. 2

FIG. 3

FIG. 4

51

$V_{Meas}$

A

50

FIG. 5

FIG. 6

FIG. 7

FIG. 8

FIG. 9

FIG. 10

FIG. 11

FIG. 12

131

131

133

130

FIG. 13

141

142

FIG. 14

FIG. 15

FIG. 16

FIG. 17

FIG. 18

FIG. 19

FIG. 20

**REFERENCES CITED IN THE DESCRIPTION**

**Patent documents cited in the description**

- EP 1756587 B1
- US 8203721 B2
- EP 1756587 A
- FI 120336 B
- US 5844686 A
- US 2005124059 A1